# NOUVEAU FASCICULE DE BREVET EUROPEEN

(11) **EP 1 836 686 B2**
(45) Date de publication et mention de la décision concernant l'opposition: **08.07.2020**
(45) Mention de la délivrance du brevet: 30.08.2017
(21) Numéro de dépôt: 05818124.9
(22) Date de dépôt: 18.11.2005
(51) Int. Cl.: G07C 9/00, E05B 49/00

(54) **CLE ELECTRONIQUE COMMUNICANTE POUR L'ACCES SECURISE A UN CYLINDRE MECATRONIQUE**
ÜBERMITTLUNG EINES ELEKTRONISCHEN SCHLÜSSELS FÜR SICHEREN ZUGANG ZU EINEM MECHATRONISCHEN ZYLINDER
COMMUNICATING ELECTRONIC KEY FOR SECURE ACCESS TO A MECHATRONIC CYLINDER

(30) Priorité: 20.12.2004 FR 0453095
(43) Date de publication de la demande: 26.09.2007
(73) Titulaire: LIRAS, 92400 Courbevoie (FR)
(72) Inventeur: CONREUX, Stéphane, F-75014 Paris (FR); FLECCHIA, Arnaud, F-92200 Neuilly-sur-Seine (FR); DE LA CHAPELLE, Roland, F-92300 Levallois-Perret (FR)
(74) Mandataire: Novagraaf Technologies
(86) Numéro de dépôt international: PCT/FR2005/002877
(87) Numéro de publication internationale: WO 2006/067286

(56) Documents cités:
- EP-A2- 1 128 335
- DE-A1- 19 848 192
- US-A- 5 838 251
- US-A1- 2001 015 691
- US-A1- 2003 102 957
- US-A1- 2003 197 591
- US-A1- 2004 222 699
- US-B1- 6 538 557

## Description

La présente invention se rapporte au domaine des clés électroniques.

La présente invention se rapporte plus particulièrement à une clé électronique pour l'accès sécurisé à un cylindre électronique, ou plus précisément mécatronique, c'est-à-dire possédant des composantes mécaniques contrôlées par des dispositifs électroniques.

L'art antérieur connaît déjà plusieurs systèmes de clé électronique.

En particulier, il est proposé dans la demande de brevet américain US 2002/0095964 une clé électronique pour l'accès à un cylindre électronique. La clé et le cylindre comprennent un microprocesseur dans lequel est stocké un code d'identification. Lorsque la clé est amenée au niveau du cylindre, la clé fournit de l'énergie au microprocesseur du cylindre par sa batterie. Lorsque celui-ci est stabilisé, il engage avec la clé un processus d'identification des codes. Si le code de la clé correspond à un des codes autorisés par le cylindre électronique, un signal d'autorisation est envoyé au microprocesseur de la clé, qui, en réponse fournit de l'énergie à une bobine provoquant l'ouverture du cylindre.

Dans ce cas, la programmation du cylindre et de la clé se fait par un dispositif de programmation. On peut donc, grâce à ce dispositif, modifier les codes d'accès d'autorisation de la clé et du cylindre.

On comprendra bien que le problème de telles solutions de l'art antérieur est que le profil d'accès d'une clé donné est figé une fois la programmation réalisée. Ainsi, un utilisateur désirant visiter plusieurs bâtiments distincts devra soit, prévoir à l'avance la programmation des codes d'accès des différents cylindres, soit reprogrammer sa clé à chaque nouveau cylindre. La nécessité d'un programmateur physique pose par ailleurs un problème d'interopérabilité entre le programmateur et la clé électronique.

Cet inconvénient pose une réelle difficulté pour les utilisateurs itinérants.

L'art antérieur connaît déjà des solutions de clé électronique pour une serrure électronique mobile dans l'espace. C'est le cas par exemple dans le brevet US 6,384,709. Ce brevet concerne des moyens de transport (par exemple un camion) dont on désire interdire l'accès tant qu'il n'est pas arrivé à une destination précise. Pour cela, le brevet divulgue l'installation d'une antenne GPS au niveau du camion, ainsi qu'un module GPS de localisation. La clé est programmée pour pouvoir fonctionner à un endroit précis. Des informations géographiques sont donc inscrites dans une mémoire de la clé. Lorsque le camion est arrivé à destination (la destination programmée dans la clé), les identifiants de la clé et de la serrure coïncident ainsi que leurs paramètres géographiques. L'ouverture est alors possible pendant un temps prédéterminé.

Ce document solutionne le problème dans le cas d'une serrure mobile, si l'ouverture est conditionnée par la position de la serrure.

Cependant, il ne solutionne pas le problème d'un utilisateur itinérant, puisque les paramètres de géolocalisation au niveau de la clé sont fixes, ce qui empêche par exemple une ouverture nécessaire, mais non programmée par les forces de l'ordre, notamment en dehors de la zone géographique d'ouverture

La présente invention entend remédier à cet inconvénient de l'art antérieur en fournissant une clé électronique permettant de gérer en temps réel, les profils d'accès des utilisateurs de telles clés.

Le document US 2004/0222699 enseigne une clé électronique selon le préambule de la revendication 1.

Dans ce document, un profil d'accès est stocké dans un dispositif de configuration électronique et comparé à la localisation de la clé. Cette localisation est déterminée localement par la clé grâce au module GPS.

Ainsi, dans ce document, le profil d'accès n'est pas modifié lorsque la clé change de localisation et, le cas échéant, sort d'une zone autorisée.

L'invention permet de pallier cet inconvénient en ce qu'elle permet de gérer les profils d'accès en temps réel.

Pour ce faire, la présente invention se rapporte à une clé électronique selon la revendication 1.

De préférence, ledit moyen de communication sans fil comprend un module de communication.

Selon une autre variante, ledit moyen de communication sans fil comprend à la fois un module de communication et un module de géolocalisation.

Selon un mode de mise en oeuvre, ledit module de communication est un module de communication de données de type GSM, GPRS ou UMTS et ledit module de géolocalisation est un module de géolocalisation par satellite de type GPS

Enfin, avantageusement, ledit module de géolocalisation est un module de géolocalisation terrestre de type GSM.

L'invention concerne également un système selon la revendication 7.

Selon un mode de réalisation, il comprend en outre une étape préalable d'envoi par la clé électronique d'au moins une information de géolocalisation, et en ce que ledit profil d'accès comprend au moins une autorisation d'accès associée à ladite information de géolocalisation.

Par ailleurs, ledit profil d'accès comprend en outre un paramètre temporel associé à ladite au moins une autorisation.

Selon un exemple ne faisant pas partie de l'invention, ledit profil d'accès comprend au moins une information de géolocalisation, au moins une information temporelle et au moins une autorisation d'accès associée à ladite information de géolocalisation et à ladite information temporelle, et en ce que ladite clé électronique réalise une étape de comparaison entre ladite information de géolocalisation et sa géolocalisation actuelle, et entre ladite information temporelle et le temps actuel pour la validation de ladite autorisation.

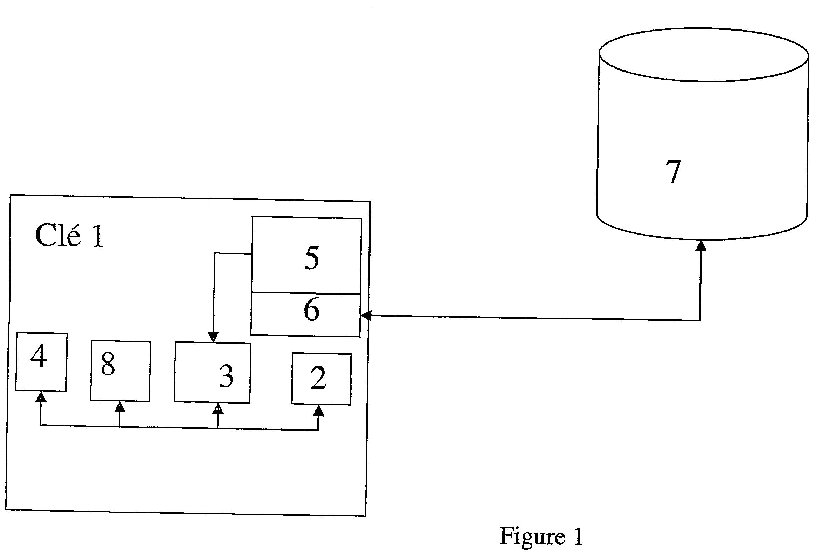

On comprendra mieux l'invention à l'aide de la description, faite ci-après à titre purement explicatif, d'un mode de réalisation de l'invention, en référence à la figure 1 annexée qui illustre schématiquement une clé communicante selon l'invention.

Illustré figure 1, la clé communicante selon l'invention comprend plusieurs fonctions électroniques pour activer un cylindre électronique. Ces fonctions sont connues de l'homme du métier dans le domaine concerné, et il s'agit par exemple d'une mémoire non volatile EE-PROM 3, d'un microprocesseur 8, d'un moyen d'alimentation 2, d'une LED pour indiquer l'ouverture du cylindre, d'un moyen sonore pour indiquer un niveau de la batterie et/ou la validité de la clé et d'une horloge 4.

Selon les modes de réalisation de l'invention, cette clé est soit une clé à contact, soit une clé sans contact.

Dans le cas d'une clé à contact, elle comprend par exemple un moyen d'alimentation 2 qui, lorsque l'accès à un cylindre est autorisé, va activer le cylindre électronique pour permettre l'ouverture de la porte.

Dans le cas d'une clé sans contact, un module infrarouge, RFID, Bluetooth ou tout mécanisme sans fil local (non représenté) va permettre par exemple l'identification de la clé pour assurer l'autorisation d'accès si l'identifiant de la clé correspond à un identifiant autorisé.

Il doit être entendu que les modes d'ouverture électronique du cylindre par la clé électronique ne doivent pas être limitatifs pour la présente invention, puisque l'homme du métier est apte à réaliser tout type de communication entre le cylindre et la clé sans toutefois sortir du champ de la présente invention. En particulier, si la clé est une clé sans contact, le cylindre compatible avec cette clé devra comporter une alimentation sous forme de batterie.

De façon tout à fait originale, la clé communicante comprend en outre un moyen de communication sans fil 5.

Aux fins de la présente invention, on entendra par moyen de communication 5, tout module de communication à distance de données, comme par exemple un module GSM, GPRS ou UMTS, ou tout module de géolocalisation à distance de type GPS par satellite, ou GSM, sur le réseau terrestre, ou toute combinaison de ces deux modules de communication de données et de géolocalisation.

La clé communicante selon l'invention comprend également une antenne réceptrice/émettrice 6 associée au moyen de communication 5 pour la communication avec des serveurs distants.

Cette antenne est connectée au module de communication et/ou de géolocalisation pour le transfert de données extérieures au niveau d'une mémoire de la clé. De préférence, et afin de minimiser la taille de la clé obtenue, on choisit une antenne plate entourant le module de communication et/ou de géolocalisation. Cependant, l'homme du métier comprendra que les possibilités de géolocalisation sont parfois difficiles selon l'environnement de la clé. En particulier, en voiture, le module de géolocalisation de la clé peut ne pas fonctionner. Pour résoudre cette difficulté, on peut par exemple prévoir un moyen de connexion externe sur la clé lui permettant d'être relié à une antenne externe, par exemple celle de la voiture comme pour les systèmes GPS actuels.

Munie de ces différents modules de communication et/ou de géolocalisation, la clé électronique selon l'invention peut communiquer avec un serveur contenant une base de données des accès de la clé.

Selon un premier mode de réalisation, la clé communicante envoie périodiquement au serveur sa localisation. En retour, en fonction de cette géolocalisation de la clé, celle-ci reçoit du serveur de gestion d'accès un profil d'accès composé d'un ensemble de cylindres accessibles pour une période prédéterminée. Dans ce mode de réalisation, le profil d'accès comprend donc un attribut d'autorisation (par exemple des identifiants de cylindres accessibles), et un attribut temporel (l'autorisation d'accès pouvant être valable pendant par exemple 3 heures). Ce profil d'accès sera alors périodiquement mis à jour lorsque la clé changera de localisation. Si sa nouvelle localisation modifie le profil d'accès, les droits d'accès actuels remplacent les droits précédents dans la mémoire de façon irréversible. En effet, en recevant les coordonnées d'une clé (définie par son identifiant), le serveur compare donc les coordonnées avec les zones d'autorisation, et actualise, le cas échéant, les autorisations de la clé en transmettant à distance l'autorisation d'accès.

Cette information d'actualisation est reçue par le module de communication de la clé, et inscrite au niveau de la mémoire réinscriptible de façon irréversible.

Selon un exemple ne faisant pas partie de l'invention, le serveur de gestion d'accès envoie un profil d'accès à la clé comprenant un attribut temporel, un ensemble d'autorisations, mais également un attribut géographique. La clé communicante enregistre donc qu'elle possède telle ou telle autorisation pendant un temps donné, dans une zone géographique donnée. Ainsi, si elle change de zone géographique, le module de géolocalisation au niveau de la clé détectera la nouvelle position, la comparera avec la zone d'autorisation et, en cas de désaccord, désactivera les autorisations. On peut noter que la désactivation des autorisations est soit réalisée au moment où la comparaison n'a pas montré la similitude entre le profil d'accès et les paramètres actuels de géolocalisation et de temps, soit au moment de la tentative d'ouverture, la clé n'émettant alors pas les codes correspondant au cylindre si les paramètres actuels ne correspondent pas au profil d'accès.

Il faut noter que dans les deux modes de réalisation, si la clé ne reçoit plus d'information en provenance du serveur pendant une durée prédéterminée elle désactive son profil d'accès et les autorisations qui y sont rattachées. Elle réalise donc un autocontrôle de la communication avec le serveur distant.

Au niveau de la base de données, les droits d'accès associés à la clé peuvent être définis de façon géographique. Ainsi, pour un identifiant de clé et une zone géographique donnée, on stocke les accès autorisés.

Après enregistrement de l'autorisation d'accès au niveau de la mémoire de la clé, celle-ci peut alors réaliser l'ouverture du cylindre mécatronique selon des mécanismes connus de l'homme du métier.

La gestion à distance des droits d'accès de la clé permet un niveau de sécurité accru par rapport aux systèmes connus. En effet, dans le cas d'une perte des clés, ou d'un vol, il est possible, par un appel d'urgence ou un code transmissible à distance, d'interrompre les droits d'accès de la clé volée ou perdue. Cette clé ne pourra alors plus être utilisée. A chaque instant, il est également possible par une mise à jour des droits d'accès d'interrompre toutes les autorisations de la clé.

Cependant, dans le cas où le moyen de communication inclut un système de localisation de type GSM ou GPS, la clé perdue ou volée peut être facilement retrouvée.

Par ailleurs, l'historique des opérations réalisées par la clé peut être visualisé grâce au moyen de communication à distance inséré dans la clé. En effet, toutes les ouvertures de cylindre, tous les changements de localisation et toutes les modifications des droits peuvent être enregistrés au niveau du serveur 7. De cette manière, tous les évènements associés à la clé peuvent être « tracés » au niveau du serveur pour la constitution d'un historique d'utilisation, ou comme moyen de preuve dans des utilisations litigieuses.

L'invention est décrite dans ce qui précède à titre d'exemple. Il est entendu que l'homme du métier est à même de réaliser différentes variantes de l'invention sans pour autant sortir du cadre du brevet.

## Revendications

1. Clé électronique (1) permettant le contrôle de l'accès à un cylindre mécatronique, ladite clé comportant au moins une mémoire (3) pour stocker des informations d'accès et un microprocesseur, au moins une antenne (6) et un moyen de communication sans fil (5) avec un serveur (7) comportant une base de données de profils d'accès, lesdites informations d'accès pouvant être modifiées à distance suivant le profil d'accès associé à ladite clé, et ledit moyen de communication sans fil (5) comprenant un module de géolocalisation, **caractérisé en ce que** le moyen de communication sans fil (5) est agencé pour envoyer périodiquement au serveur (7) la géolocalisation de la clé, et **en ce que**, en retour, ledit moyen de communication sans fil (5) est agencé pour recevoir dudit serveur (7), en fonction de la géolocalisation de la clé, ledit profil d'accès comprenant au moins une autorisation d'accès associée à ladite géolocalisation et un paramètre temporel associé à ladite au moins une autorisation d'accès et définissant une période de validité de ladite au moins une autorisation d'accès, le profil d'accès étant mis à jour périodiquement lorsque la clé change de localisation, une autorisation d'accès actuelle remplaçant de façon irréversible une autorisation d'accès précédente dans la mémoire si une nouvelle localisation de la clé modifie le profil d'accès.

2. Clé électronique selon la revendication 1, **caractérisée en ce que** le profil d'accès dépend de la géolocalisation et est composé d'un ensemble de cylindres accessibles pour une période déterminée

3. Clé électronique selon la revendication selon l'une quelconque des revendications précédentes, **caractérisée en ce que** ledit moyen de communication sans fil (5) comprend un module de communication.

4. Clé électronique selon la revendication 3, **caractérisée en ce que** ledit module de communication est un module de communication de données de type GSM, GPRS ou UMTS.

5. Clé électronique selon l'une quelconque des revendications précédentes, **caractérisée en ce que** ledit module de géolocalisation est un module de géolocalisation par satellite de type GPS

6. Clé électronique selon l'une des revendications 1 à 4, **caractérisé en ce que** ledit module de géolocalisation est un module de géolocalisation terrestre de type GSM.

7. Système pour le contrôle d'accès comprenant une clé électronique (1) selon l'une quelconque des revendications précédentes et un serveur (7) comportant une base de données de profils d'accès, ladite clé électronique comportant au moins un module de communication sans fil (5) pour communiquer avec ledit serveur (7), et ledit serveur (7) comprenant un moyen de gestion des profils d'accès associés à ladite clé, le serveur (5) étant agencé pour transmettre à distance le profil d'accès à la clé électronique, en retour de la réception périodique de la géolocalisation de la clé en provenance de la clé électronique (1), en fonction de la géolocalisation de la clé, ledit profil d'accès comprenant au moins une autorisation d'accès associée à ladite géolocalisation et un paramètre temporel associé à ladite au moins une autorisation d'accès et définissant une période de validité de ladite au moins une autorisation d'accès, le profil d'accès étant mis à jour périodiquement lorsque la clé change de localisation.

## Patentansprüche

1. Elektronischer Schlüssel (1), welcher die Kontrolle des Zugangs zu einem mechatronischen Zylinder ermöglicht, wobei der Schlüssel wenigstens einen Speicher (3) zum Speichern von Zugangsinformationen und einen Mikroprozessor, wenigstens eine Antenne (6) und ein Mittel zur drahtlosen Kommunikation (5) mit einem Server (7), der eine Datenbank von Zugangsprofilen aufweist, umfasst, wobei die Zugangsinformationen aus der Ferne gemäß dem Zugangsprofil, das dem Schlüssel zugeordnet ist, verändert werden können, und wobei das Mittel zur drahtlosen Kommunikation (5) ein Geolokalisierungsmodul umfasst, **dadurch gekennzeichnet, dass** das Mittel zur drahtlosen Kommunikation (5) dafür ausgelegt ist, periodisch die Geolokalisierung des Schlüssels an den Server (7) zu senden, und dadurch, dass das Mittel zur drahtlosen Kommunikation (5) im Gegenzug dafür ausgelegt ist, von dem Server (7) in Abhängigkeit von der Geolokalisierung des Schlüssels das Zugangsprofil zu empfangen, das wenigstens eine Zugangsberechtigung, die der Geolokalisierung zugeordnet ist, und einen Zeitparameter, welcher der wenigstens einen Zugangsberechtigung zugeordnet ist und eine Gültigkeitsdauer der wenigstens einen Zugangsberechtigung definiert, umfasst, wobei das Zugangsprofil periodisch aktualisiert wird, wenn der Schlüssel seinen Standort ändert, wobei eine aktuelle Zugangsberechtigung auf irreversible Weise eine vorhergehende Zugangsberechtigung im Speicher ersetzt, falls ein neuer Standort des Schlüssels das Zugangsprofil ändert.

2. Elektronischer Schlüssel nach Anspruch 1, **dadurch gekennzeichnet, dass** das Zugangsprofil von der Geolokalisierung abhängt und aus einer Gesamtheit von Zylindern besteht, die für einen bestimmten Zeitraum zugänglich sind.

3. Elektronischer Schlüssel nach dem Anspruch nach einem der vorhergehenden Ansprüche, **dadurch gekennzeichnet, dass** das Mittel zur drahtlosen Kommunikation (5) ein Kommunikationsmodul umfasst.

4. Elektronischer Schlüssel nach Anspruch 3, **dadurch gekennzeichnet, dass** das Kommunikationsmodul ein Modul zur GSM-, GPRS- oder UMTS-Datenkommunikation ist.

5. Elektronischer Schlüssel nach einem der vorhergehenden Ansprüche, **dadurch gekennzeichnet, dass** das Geolokalisierungsmodul ein Modul zur Geolokalisierung über Satellit vom Typ GPS ist.

6. Elektronischer Schlüssel nach einem der Ansprüche 1 bis 4, **dadurch gekennzeichnet, dass** das Geolokalisierungsmodul ein Modul zur terrestrischen Geolokalisierung vom Typ GSM ist.

7. System zur Zugangskontrolle, welches einen elektronischen Schlüssel (1) nach einem der vorhergehenden Ansprüche und einen Server (7), der eine Datenbank von Zugangsprofilen aufweist, umfasst, wobei der elektronische Schlüssel wenigstens ein Modul zur drahtlosen Kommunikation (5) zum Kommunizieren mit dem Server (7) aufweist und der Server (7) ein Mittel zur Verwaltung der dem Schlüssel zugeordneten Zugangsprofile umfasst, wobei der Server (5) dafür ausgelegt ist, im Gegenzug zum periodischen Empfang der von dem elektronischen Schlüssel (1) stammenden Geolokalisierung des Schlüssels das Zugangsprofil, aus der Ferne an den elektronischen Schlüssel, abhängig von der Geolokalisierung des Schlüssels, zu übertragen, wobei das Zugangsprofil wenigstens eine Zugangsberechtigung, die der Geolokalisierung zugeordnet ist, und einen Zeitparameter, welcher der wenigstens einen Zugangsberechtigung zugeordnet ist und eine Gültigkeitsdauer der wenigstens einen Zugangsberechtigung definiert, umfasst, wobei das Zugangsprofil periodisch aktualisiert wird, wenn der Schlüssel seinen Standort ändert.

## Claims

1. Electronic key (1) allowing controlled access to a mechatronic cylinder, said key comprising at least one memory (3) for storing access information and a microprocessor, at least one antenna (6) and a wireless communication means (5) with a server (7) comprising a database of access profiles, said access information being able to be remotely modified according to the access profile associated with said key, and said wireless communication means (5) comprising a geolocation module, **characterized in that** the wireless communication means (5) is arranged to periodically send to the server (7) the geolocation of the key, and **in that**, in return, said wireless communication means (5) is arranged to receive from said server (7), as a function of the geolocation of the key, said access profile comprising at least one access authorization associated with said geolocation and a temporal parameter associated with said at least one access authorization and defining a period of validity of said at least one access authorization, the access profile being updated periodically when the key changes location, a current access authorization irreversibly replacing a preceding access authorization in the memory if a new location of the key modifies the access profile.

2. Electronic key according to Claim 1, **characterized in that** the access profile depends on the geolocation and is composed of a set of cylinders that are accessible for a determined period.

3. Electronic key according to the claim according to either one of the preceding claims, **characterized in that** said wireless communication means (5) comprises a communication module.

4. Electronic key according to Claim 3, **characterized in that** said communication module is a data communication module of GSM, GPRS or UMTS type.

5. Electronic key according to any one of the preceding claims, **characterized in that** said geolocation module is a satellite geolocation module of GPS type.

6. Electronic key according to one of Claims 1 to 4, **characterized in that** said geolocation module is a terrestrial geolocation module of GSM type.

7. Access control system comprising an electronic key (1) according to any of the preceding claims and a server (7) comprising a database of access profiles, said electronic key comprising at least one wireless communication module (5) for communicating with said server (7), and said server (7) comprising a means for managing access profiles associated with said key, the server (5) being arranged to remotely transmit the access profile to the electronic key, in return for the periodic reception of the geolocation of the key from the electronic key (1), as a function of the geolocation of the key, said access profile comprising at least one access authorization associated with said geolocation and a temporal parameter associated with said at least one access authorization and defining a period of validity of said at least one access authorization, the access profile being updated periodically when the key changes location.
